Europäisches Patentamt

European Patent Office

Office européen des brevets

(11) Veröffentlichungsnummer: **0 286 733 B1**

# EUROPÄISCHE PATENTSCHRIFT

(45) Veröffentlichungstag der Patentschrift: **16.06.93**

(21) Anmeldenummer: **87119201.9**

(22) Anmeldetag: **24.12.87**

(51) Int. Cl.5: **G02B 23/24**, G02B 13/04, G02B 9/06

(54) **Weitwinkel-Objektiv für Endoskope.**

(30) Priorität: **11.04.87 DE 3712453**

(43) Veröffentlichungstag der Anmeldung:
**19.10.88 Patentblatt 88/42**

(45) Bekanntmachung des Hinweises auf die
Patenterteilung:
**16.06.93 Patentblatt 93/24**

(84) Benannte Vertragsstaaten:
**BE CH DE FR GB LI NL**

(56) Entgegenhaltungen:
**DE-A- 3 511 350**

(73) Patentinhaber: **Richard Wolf GmbH**
**Pforzheimer Strasse 32**
**W-7134 Knittlingen(DE)**

(72) Erfinder: **Zobel, Jürgen, Dipl.-Mathematiker**
**Am Söllinger 5**
**W-7518 Bretten-Sprantal(DE)**

(74) Vertreter: **Wilcken, Thomas, Dipl.-Ing. et al**
**Musterbahn 1**
**W-2400 Lübeck (DE)**

Rank Xerox (UK) Business Services
(3.10/3.6/3.3.1)

**Beschreibung**

Die Erfindung gebt aus von einem Weitwinkel-Objektiv für Endoskope, insbesondere für Video-Endoskope mit einem Halbleiter-Bildwandler und für Endoskope mit einem Fiberbildleiter, im wesentlichen bestehend aus einem distalen, einem Objekt zugewandten Meniskus mit objektseitiger Hohlfläche, einem weiteren optischen und auf der Bildseite des Meniskus angeordneten Bauelement sowie einer diesem optischen System gegebenenfalls zugeordneten Blende.

In der DE-A-35 11 350 ist ein optisches Beleuchtungssystem für Hochvergrößerungs-Endoskope beschrieben, bei dem ein mit einem Deckglas zusammenwirkendes optisches Beobachtungssystem aus einer forderen Meniskuslinse und einer dahinter mit Abstand angeordneten, bikonvexen Sammellinse besteht und beide Linsen von einem Beleuchtungslichtleiter ringförmig umgeben sind. Dieses optische Beobachtungssystem ist jedoch in der Hinsicht gestaltet, daß kein störendes Flackerlicht aus dem Lichtleiter in das optische System eindringen kann, was für Hochvergrößerungs-Endoskope ein entscheidender Faktor ist, und daß das Licht des Lichtleiters zur einwandfreien Objektbeleuchtung ausreicht.

Desweiteren wird bei Objektiven der einleitend angeführten Art die Forderung gestellt, daß sie bei kleinem Durchmesser eine geringe Baulänge aufweisen. Dies läßt sich jedoch mit den bisher bekannten Optiken nicht ohne weiteres oder nur durch entsprechend hohen Aufwand erreichen, wenn außerdem ein großer Bild- bzw. Objektfeldwinkel und eine gute Korrektur des optischen Systems erzielt werden sollen.

Der Baugröße sind aber gewisse Grenzen gesetzt, da für die Mittendicken, die Randdicken und auch für die Scheitelabstände der Linsen Mindestwerte gelten, so daß insbesondere die Baulänge der Objektive nicht beliebig reduziert werden kann.

Wenn das Objektiv beispielsweise aus zwei Achromaten besteht, läßt sich auch keine einwandfreie Korrektur der Bildfeldwölbung erreichen, da die hierzu erforderlichen negativen Brechkräfte im optischen Gesamtsystem fehlen.

Die Folge ist ein starker Abfall der Schärfe am Randbereich. Deshalb sind solche optischen Systeme nur einsetzbar, wenn der geforderte Objektfeldwinkel maximal 60° beträgt, falls nicht ein entsprechend hoher Aufwand für eine Begrenzung der Bildfehler durch eine Randvignettierung getrieben wird.

Da bei flexiblen Endoskopen mit einem Fiberbildleiter und auch flexiblen Video-Endoskopen mit einem als Chip ausgebildeten Bildwandler der distale starre Endteil der Endoskope möglichst kurz sein soll, einerseits aber bei Video-Endoskopen durch den Bildwandler, die Elektronik und dergleichen der starre Endteil über die Baulänge des Objektives distalwärts hinausgeht und andererseits bei Endoskopen mit Fiberbildleiter zur Objektbaulänge das in einer Metallhülse starr eingekittete Ende des Fiberbündels hinzukommt, ist es verständlich, daß gerade bei solchen Endoskopen die Kürze des Objektives von entscheidender Bedeutung ist.

Dementsprechend besteht die Aufgabe der Erfindung in der Schaffung eines Weitwinkel-Objektives für Endoskope, das bei einfachem Aufbau, ausreichender Korrektur und großem Objektfeldwinkel eine geringe Baulänge zuläßt.

Zur Lösung dieser Aufgabe wird das eingangs erwähnte Weitwinkel-Objektiv erfindungsgemäß so ausgebildet, daß das weitere optische Bauelement ebenfalls als Meniskus oder als plankonvexe Linse ausgebildet ist und daß für das erste und das weitere Bauelement die folgenden Beziehungen

$$\alpha > 85°$$
$$n_d > 1{,}7$$
$$Vd > 40$$
$$\infty > |rl| > |r2|$$
$$|r3| < |r\,4| \leqq \infty$$
$$2F < fl < 3F$$

$$f2 > \frac{F \cdot fl}{fl - F}$$

mit folgenden Bedeutungen gelten:

$\alpha$ = Objektfeldwinkel

$n_d$ = Brechungsindex für die Wellenlänge d

$Vd$ = Abbe-Zahl für die Wellenlänge d

$d$ = 587,6 nm

$rl$ = objektseitiger Radius des distalen Meniskus

$r2$ = bildseitiger Radius des distalen Meniskus

$r3$ = objektseitiger Radius des proximalen Meniskus:, bzw. der plankonvexen Linse

$r4$ = bildseitiger Radius des proximalen Meniskus:, bzw. der plankonvexen Linse

$F$ = Gesamtweite des Objektivs

$fl$ = Brennweite des distalen Meniskus

$f2$ = Brennweite des proximalen Meniskus:, bzw. der plankonvexen Linse.

Besonders günstige Abmessungen ergeben sich für ein solches Objektiv, wenn dem Objektivaufbau für die Bau-Länge L des Objektivs und den diagonal durch die Sensorfläche des Bildwandlers bzw. den durch die Eintrittsfläche des Fiberbildleiters gelegten Durchmesser D die Beziehung L < 2D zu Grunde gelegt wird.

Die Vorteile eines mit dem erfindungsgemäßen Objektiv distalseitig ausgestatteten Endoskops bestehen insbesondere in dessen universeller Einsetzbarkeit aufgrund der geringen Abmessungen dieses Objektivs.

Die Erfindung ist im folgenden anhand der Zeichnung näher erläutert. Es zeigt jeweils in symbolischer Darstellung

Figur 1    ein erfindungsgemäß ausgeführtes Objektiv mit zwei Menisken, die das Bild auf einen elektronischen Bildwandler projizieren,

Figur 2    eine Anordnung entsprechend Figur 1 mit einer proximal angeordneten Sonderlinse in Plan-Konvex-Ausführung,

Figur 3    ein erfindungsgemäß ausgeführtes Objektiv mit zwei Menisken, die das Bild auf einen Fiberbildleiter projizieren, und

Figur 4    eine Anordnung entsprechend Figur 3 mit einer proximal angeordneten Sonderlinse in Plan-Konvex-Ausführung.

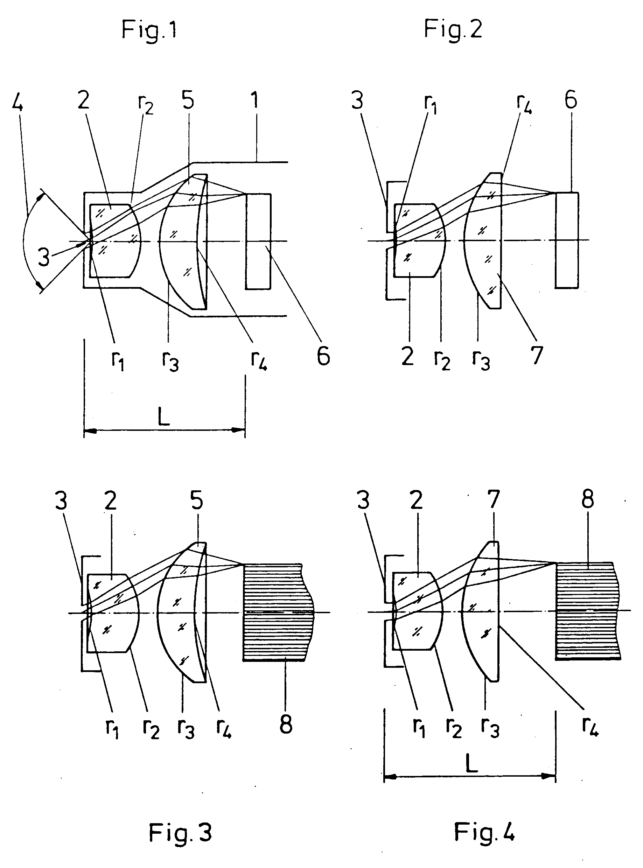

In einer lediglich teilweise dargestellten Rohrhülse 1 am distalseitigen Ende des nicht gezeigten flexiblen Tubus eines Video-Endoskops üblicher Bauart ist entsprechend Figur 1 das ein Objektiv bildende optische System untergebracht. Dieses besteht aus einem ersten, mit seiner konkaven Fläche dem Objekt zugewandten distalen Meniskus 2, dem eine Blende 3 derart vorgeschaltet ist, daß ein Objekt- bzw. Gesichtsfeldwinkel 4 von $\alpha \sim 100°$ offengehalten wird. Der objektseitige Krümmungsradius r1 dieses ersten Meniskus 2 ist in dem Ausführungsbeispiel nach Figur 1 mit 2,5 cm und der bildseitige Radius r2 mit 1,7 cm ausgeführt.

Dem ersten Meniskus 2 ist ein zweiter Meniskus 5 nachgeordnet, derart, daß dessen konvexe Fläche dem ersten Meniskus 2 zugewandt ist und demzufolge die konkave Fläche die Bildseite bildet. Die Objektseite dieses zweiten Meniskus 5 weist einen Krümmungsradius von r3 = 2,3 cm und die Bildseite eines solchen von r4 = 6,5 cm auf. Das von diesem Linsensystem erzeugte Bild wird auf ein als Bildwandler fungierendes CCD-Element 6 projiziert, welches das Bild des Objektes in bekannter Weise in elektronische Signale umsetzt, die über ein in dem flexiblen Tubus des Endoskops befindliches elektrisches Kabel an das Empfangssystem weitergegeben werden.

Figur 2 zeigt eine gleichermaßen die beanspruchten Parameter aufweisende Alternativausführung des Objektives, bei dem der erste Meniskus 2 objektseitig den Krümmungsradius r1 = 2,5 cm besitzt und bildseitig mit r2 = 1,4 cm ausgeführt ist, während das zweite Bauelement 7 eine Sonderheit aufweist insofern, als sein objektseitiger Krümmungsradius r3 = 2,75 cm mißt und der bildseitige r4 = ∞ ist, das heißt, diese Fläche plan ist. Es ist also eine plankonvexe Linse.

Figur 3 stellt das Objektiv eines mit einem Fiberbildleiter ausgestatteten Endoskops dar, bei dem die entsprechend Figur 1 angeordneten Menisken 2 und 5 hinsichtlich ihrer Krümmungsradien in Anpassung an den runden Querschnitt des Fiberbildleiterbündels 8 verändert sind. So ist der objektseitige Krümmungsradius des ersten Meniskus 2 mit r1 = 2,25 cm, der bildseitige desselben und der objektseitige des zweiten Meniskus 5 mit r2 = 1,7 cm entsprechend der Ausführung nach Figur 1 belassen und der bildseitige Krümmungsradius des zweiten Meniskus mit r4 = 5,75 cm ausgebildet.

In Figur 4 schließlich ist in Analogie zu der Darstellung nach Figur 2 das Objekt eines Fiberbildleiter-Endoskops gezeigt, bei dem der Meniskus 2 objektseitig mit einem Krümmungsradius von r1 = 2,25 cm und bildseitig mit einem solchen von r2 = 1,83 cm ausgeführt ist, während das zweite Bauelement 7 wiederum eine plane bildseitige Fläche, das heißt eine solche mit dem Krümmungsradius r4 = ∞, besitzt und objektseitig mit r3 = 2,72 cm ausgebildet ist.

Unter Berücksichtigung der vorher erwähnten Daten und Beziehungen ergeben sich rechnerisch für die vier dargestellten Objektive folgende Werte, falls von $\alpha = 100°$ ausgegangen wird.

Wenn man bei den Objektiven nach den Figuren 1 und 2 z.B. für die beiden Menisken Vd = 46,5 und $n_d$ = 1,8 ansetzt, ergeben sich für das Objektiv nach Figur 1 die Beziehungen 3,6 = 2 F < fl < 3,81 < 3 F = 5,4 und f2 = 3,99 > F.fl/fl-F = 3,41 sowie für das Objektiv nach Figur 2 die Beziehungen 3,6 = 2 F < fl = 4,35 < 3 F = 5,4 und f2 = 3,41 > F. fl/fl-F = 3,07.

Bei den Objektiven entsprechend den Figuren 3 und 4 gelten beispielsweise für den jeweils distalen Meniskus die Werte Vd = 41 und $n_d$ = 1,88 und für die jeweils proximale plankonvexe Linse die Werte Vd = 50 und $n_d$ = 1,79. Hieraus folgen dann für das Objektiv nach Figur 3 die Beziehungen 3,6 = 2 F < fl = 3,72 < 3 F = 5,4 und f2 = 4,29 > F.fl/fl -F = 3,41 und für das Objektiv nach Figur 4 die Beziehungen 3,6 = 2 F < fl = 4,51 < 3F = 5,4 und f2 = 3,43 > F.fl/fl-F = 2,99.

**Patentansprüche**

1.   Weitwinkel-Objektiv für Endoskope, insbesondere für Video-Endoskope mit einem Halbleiter-Bildwandler und für Endoskope mit einem Fiberbildleiter, im wesentlichen bestehend aus einem distalen, einem Objekt zugewandten Meniskus mit objektseitiger Hohlfläche, einem weiteren optischen und auf der Bildseite des Meniskus angeordneten Bauelement sowie einer diesem optischen System gegebenenfalls zugeordneten Blende, dadurch gekennzeichnet, daß das weitere optische Bauelement ebenfalls als Meniskus (5) oder als plankonvexe Linse (7) ausgebildet ist und daß für das erste und das weitere Bauelement (2;5,7) die folgenden Beziehungen

$\alpha > 85°$
$n_d > 1{,}7$
$Vd > 40$
$\infty > |r1| > |r2|$
$|r3| < |r4| \leq \infty$
$2F < f1 < 3F$

$$f2 > \frac{F.f1}{f1-F}$$

mit folgenden Bedeutungen gelten:

| | |
|---|---|
| $\alpha$ = | Objektfeldwinkel |
| $n_d$ = | Brechungsindex für die Wellenlänge d |
| $Vd$ = | Abbe-Zahl für die Wellenlänge d |
| $d$ = | 587,6 nm |
| $r1$ = | objektseitiger Radius des distalen Meniskus |
| $r2$ = | bildseitiger Radius des distalen Meniskus |
| $r3$ = | objektseitiger Radius des proximalen Meniskus:, bzw. der plankonvexen Linse |
| $r4$ = | bildseitiger Radius des proximalen Meniskus:, bzw. der plankonvexen Linse |
| $F$ = | Gesammtbrennweite des Objektivs |
| $f1$ = | Brennweite des distalen Meniskus |
| $f2$ = | Brennweite des proximalen Meniskus:, bzw. der plankonvexen Linse. |

2. Weitwinkel-Objektiv nach Anspruch 1, dadurch gekennzeichnet, daß für die Baulänge L des Objektives und den diagonal durch die Sensorfläche des Bildwandlers (6) bzw. den durch die Eintrittsfläche des Fiberbildleiters (8) gelegten Durchmesser D die Beziehung L < 2D gilt.

**Claims**

1. A wide-angle lens for endoscopes, in particular for video-endoscopes with a semiconductor image converter and for endoscopes with a fibre image conductor, consisting essentially of a distal meniscus, facing an object, with a concave surface on the object side, of a further optical component arranged on the image side of the meniscus and also of an aperture, if necessary associated with this optical system, characterised in that the further optical component is likewise constructed as meniscus (5) or as planoconvex lens (7) and that for the first and the further component (2; 5,7) the following relationships apply:

$\alpha > 85°$
$n_d > 1.7$
$Vd > 40$
$\infty > |r1| > |r2|$
$|r3| < |r4| \leq \infty$
$2F < f1 < 3F$

$$f2 > \frac{F.f1}{f1-F}$$

with the following meanings:

| | |
|---|---|
| $\alpha$ = | object field angle |
| $n_d$ = | refractive index for the wave length d |
| $Vd$ = | Abbé number for the wave length d |
| $d$ = | 587.6 nm |
| $r1$ = | radius of the distal meniscus on the object side |
| $r2$ = | radius of the distal meniscus on the image side |
| $r3$ = | radius of the proximal meniscus or respectively of the planoconvex lens on the object side |
| $r4$ = | radius of the proximal meniscus or respectively of the planoconvex lens on the image side |
| $F$ = | total focal length of the lens |
| $f1$ = | focal length of the distal meniscus |
| $f2$ = | focal length of the proximal meniscus or respectively of the planoconvex lens |

2. A wide-angle lens according to Claim 1, characterised in that for the total length L of the lens and the diameter D, placed diagonally through the sensor face of the image converter (6) or respectively through the entry face of the fibre image conductor (8), the relationship L < 2D applies.

**Revendications**

1. Objectif à grand angle pour endoscopes, en particulier pour des endoscopes vidéo pourvus d'un transducteur d'image à semi-conducteur et pour des endoscopes pourvus d'un circuit vidéo à filtre, se composant sensiblement d'un ménisque distal tourné vers un objet et présentant une surface creuse côté objet, d'un autre élément optique disposé sur le côté image du ménisque ainsi que d'un obturateur associé éventuellement à ce système optique, caractérisé en ce que l'autre composant optique est également réalisé sous forme de ménisque (5) ou de lentille plan-convexe (7) et en ce que les relations suivantes sont valables pour le premier composant et le deuxième composant (2;5,7)

$\alpha > 85°$

$n_d > 1,7$

$Vd > 40$

$\infty > |r1| > |r2|$

$|r3| < |r4| \leq \infty$

$2F < f1 < 3F$

$$f2 > \frac{F.f1}{f1-F}$$

avec les significations suivantes :

$\alpha$ = angle de champ d'objectif

$n_d$ = indice de réfraction pour la longueur d'onde d

$Vd$ = coefficient de Abbe pour la longueur d'onde d

d = 587,6 nm

r1 = rayon du ménisque distal côté objet

r2 = rayon du ménisque distal côté image

r3 = rayon du ménisque proximal ou de la lentille planconvexe côté objet

r4 = rayon du ménisque proximal ou de la lentille planconvexe côté image

F = distance focale totale de l'objectif

f1 = distance focale du ménisque distal

f2 = distance focale du ménisque proximal ou de la lentille plan-convexe

2. Objectif à grand angle selon la revendication 1, caractérisé en ce que la relation L < 2D est valable pour la longueur hors tout L de l'objectif et pour le diamètre D tracé selon la diagonale de la surface de capteur du transducteur d'image (6) ou pour le diamètre D du diamètre tracé transversalement à la surface d'entrée du circuit d'image de fibre (8).

Fig.1

Fig.2

Fig.3

Fig.4